(19) **Europäisches Patentamt**
**European Patent Office**
**Office européen des brevets**

(11) **EP 1 680 703 B1**

(12) **EUROPEAN PATENT SPECIFICATION**

(45) Date of publication and mention
of the grant of the patent:
**09.07.2014 Bulletin 2014/28**

(51) Int Cl.:
**G02F 1/1335** (2006.01)  **G02C 7/10** (2006.01)

(21) Application number: **04799317.5**

(22) Date of filing: **03.11.2004**

(86) International application number:
**PCT/IL2004/001008**

(87) International publication number:
**WO 2005/043224 (12.05.2005 Gazette 2005/19)**

(54) **LIQUID-CRYSTAL EYEGLASS SYSTEM**

FLÜSSIGKRISTALL-BRILLENSYSTEM

SYSTEME DE LUNETTE A CRISTAUX LIQUIDES

(84) Designated Contracting States:
**AT BE BG CH CY CZ DE DK EE ES FI FR GB GR HU IE IS IT LI LU MC NL PL PT RO SE SI SK TR**

(30) Priority: **03.11.2003 US 516290 P**

(43) Date of publication of application:
**19.07.2006 Bulletin 2006/29**

(73) Proprietor: **Ophthocare Ltd.**
**84106 Beer Sheba (IL)**

(72) Inventors:
• **HERZOG, Rafi**
**43549 RaAnana (IL)**

• **BEN-EZRA, Omry**
**94102 Jerusalem (IL)**
• **GROSS, Yossi**
**73160 Moshav Mazor (IL)**

(74) Representative: **Dennemeyer & Associates S.A.**
**55, rue des Bruyères**
**1274 Howald (LU)**

(56) References cited:
**WO-A1-98/52091**      **FR-A1- 2 684 770**
**US-A- 4 715 702**      **US-A- 5 264 877**
**US-A- 5 264 877**      **US-A- 5 452 026**
**US-A- 5 608 567**      **US-A- 5 928 718**
**US-A1- 2001 015 123**  **US-A1- 2001 050 754**

**Description**

## FIELD AND BACKGROUND OF THE INVENTION

The present invention relates to eyeglasses for the treatment of amblyopia, weak eye, and strabismus, and more particularly, to liquid-crystal, electronically controlled glasses, designed to exercise the eyes.

Amblyopia, also known as lazy eye, is dimness of vision, which occurs in one eye without apparent physical defect or disease. It is probably the most common cause of monocular blindness and occurs in about 4% of the population. It is believed to be caused by a neural input imbalance of either the optical power of the eyes or ocular misalignment. Both of these conditions may result in an incompatible binocular visual input to the visual centers of the brain that prevents a normal, single visual perception. This incompatibility of visual perception induces a competitive inhibition between the two eyes resulting in a "strong eye" and a "weak eye". As a result of the "strong eye" becoming dominant over the "weak eye" a permanent structural degradation of the cellular anatomy of portions of the lateral genticulate body and visual cortex of the occipital lobe of the brain may occur. This degradation may lead to loss of visual acuity and loss of higher order binocular functions, such as stereopsis. At about the age of ten, a child reaches visual maturity, and the disease becomes permanent.

Weak eye is a similar condition but may result from an injury and may affect adults as well.

Strabismus, which is commonly known as crossed-eyes, is a vision condition in which a person can not align both eyes simultaneously under normal conditions. Either one or both of the eyes may turn up, down, in, or out. The turning of the eye may be constant, that is all of the time, or intermittent, for example, when the person is under stress.

Commonly, a patch is placed over the strong eye, to blocking vision in the strong, good eye, in order to force the weaker eye to "work harder". It is believed that this establishes and reinforces the development of neural pathways in the brain, and causes proper connections to develop between the weak, amblyopic eye and the visual cortex. For example, a commonly recommended regimen is to patch the strong eye for up to a week for every year of the child's age until vision is restored, with the process being repeated if there is no improvement. After a period of between several months to several years, the use of the patch is gradually reduced, affording both eyes the opportunity to develop normal binocular vision.

However, there are problems with using a patch. Basically, since the child is allowed to use only his weak eye, he cannot see very well. Furthermore, the patch creates negative social implications, which typically generate resistance and poor compliance from the child, and anxiety in both the child and parents. Moreover, medically, the practice of patching is not without risk. For example, it may lead to a reversal so that the weak eye becomes the strong eye, but the strong eye becomes weak. Additionally, it may induce a crossing of the child's eyes, in those types of amblyopia in which the eyes are undeviated with a hyperopic refractive error. In addition, development of normal binocular vision during the patching treatment is interrupted.

In an attempt to overcome the difficulties of patching, a technique known as "penalization" has been developed. In this treatment, the strong eye is optically and pharmacologically weakened so that the child is forced to use the weak eye more.

In a study on compliance with eye patching, as assessed through self-report accounts of parents, [Searle, A., Norman, P., Harrad, R., and Vedhara, K., Psychosocial and clinical determinants of compliance with occlusion therapy for amblyopic children, Nature Publishing Group (npg), March 2002, Volume 16, Number 2, Pages 150-155], it was found that only 54% of parents were achieving orthoptists' recommendations to patch their child. The study suggested that consultations with parents exhibiting higher levels of success with patching may elicit strategies that could be shared with parents experiencing difficulties with patching their children. In addition, the perceived efficacy of the treatment could be enhanced if orthoptists emphasized evidence of improvements in visual acuity, which may, in turn, foster the maintenance of eye patching.

A coin-sized device, occlusion dose monitor (ODM), has been developed [Simonsz HJ, Polling JR, Voorn R., Electronic Monitoring of Treatment Compliance in Patching for Amblyopia. Strabismus, 1999, Vol7, No.2 pp 113-123], to monitor and record actual wearing time of the patch so that in cases where there is no medical improvement of the patient, a physician can determine whether the failure was due to noncompliance or possibly due to a different underlying disorder. The back of the ODM was glued to the front of an amblyopia patch with double-sided Scotch tape, and two thermistors measured the temperature difference between the front and back of the ODM every 2-5 minute. The data were stored in EEPROM memory and read out after a week's recording by connecting the controller to a PC. The parents were instructed during home visits every three months to put the ODM on the patch and knew that a recording was being made. During the use of this device, it was discovered that the practice of patching had a very poor compliance rates, of only about 5 minutes a day, yet many of these children had successful results. With this finding, it was believed that strict compliance of only 30 minutes or so a day might result in successful treatment.

US Patent 6,511,175, to Hay, et al., dated, January 28, 2003, entitled, "Apparatus and method for treatment of amblyopia," whose disclosure is incorporated herein by reference, discloses a method for treating amblyopia in children. A pair of eyeglasses or goggles is provided with an electrically and selectively darkenable lens, such as am LCD lens, so that for selected portions of time, one or the other eye may be occluded. In one embodiment, circuitry for providing pulses of a selected width to one or both lenses is incorporated in the eyeglasses or goggles, with the lens associated with the deviating eye receiving a wider pulse than the lens associated with the other eye. Thus, the deviating eye is occluded for a longer period of time than the normal eye. In another embodiment, a computer is coupled to the eyeglasses or goggles, and is provided with a program of interest to the child, which selectively occludes the deviating eye.

As taught by US Patent 6,511,175, the LCD cells making up the lenses of the eyeglasses may be driven independently of one another by variable frequency pulse generators, and may be driven at frequencies, which are adjustable from 0 to about 10,000 Hz or more. These frequencies are provided to the lens drivers, which in turn conventionally drive the LCD lenses. Such frequencies may be in the form of a pulse train, wherein very short pulses are developed, with the spacing between the pulses being adjustable. As such, where the LED cells are driven to an opaque state upon occurrence of a pulse and revert to a transparent state in the absence of a pulse, the LCD cells become increasingly opaque with increasing frequency, i.e. the pulses being squeezed more closely together. In this embodiment, it is anticipated that the patient would not see the discrete transitions between transparent and opaque, the frequency being above that of flicker fusion, which is generally about 60 Hz or so. Instead, the patient would see a general lightening or darkening of the LCD lenses. Alternately, where the LCD cells are constructed to be of variable transmissivity, adjustment is provided to allow transmissivity of the cells to be varied from opaque to transparent. Further, the frequency of the generators may be adjustable, as by a small potentiometer or other electrical adjustment mounted in the eyeglasses so as to be accessible only by a medical practitioner, so that degree of opacity may be adjusted over time as the subject is treated. Further yet, the LCD cells may be maintained, as by a switch, in a static clear or opaque state by the steady state controllers, which in turn provide steady state signals to the drivers. Thus, vision in one or the other eye of a user may be selectively blocked entirely, or may be controllably reduced as needed.

Additionally, as taught by US Patent 6,511,175, if the child is immersed in an activity during periods of treatment, such a play activity or other activity that requires concentration by the child, recovery occurs more rapidly than if the child is not focused or not concentrating. As such, an interactive computer game or interesting video that holds the interest of the child may accelerate treatment time.

US Patent 5,452,026, to Marcy, III, dated, September 19, 1995, entitled, "Depth perception improvement for persons having a weak eye," whose disclosure is incorporated herein by reference, discloses a vision improvement device using glasses in which one or more lens is a rapid shutter, such as a liquid crystal shutter. The subject wears the glasses and the shutter is rapidly operated such that vision from the strong eye is subdued or blocked off long enough to allow the weak eye information to be processed by the brain to promote improved depth perception. One eye is permitted to see while the other eye is occluded. By control of the shutter the weaker eye can be exposed for longer than the stronger eye to compensate for the brain's ability to ignore the weak eye information. In an alternative embodiment, individual eyes may be manipulated to favor one over the other to achieve the benefit of improving depth perception. As such, control over vision results in an improved balance of per-eye information, increasing stereoscopic vision.

US Patent 5,264,877, to Hussey, dated November 23, 1993, entitled, "Eyeglasses for use in the treatment/diagnosis of certain malfunctions of the eye," whose disclosure is incorporated herein by reference, discloses an eyeglass frame and two lenses. Each lens has a film on one surface thereof, which is changeable between an opaque condition and a transparent condition, controlled by an electrical circuit.

WO 98/52091 A1 generally discloses therapeutic glasses that include electrochromic lenses that may be operated to restrict the lateral vision to a lateral vision field.

US 5 264 877 A generally discloses eyeglasses for use in the treatment of certain malfunctions of the eye that includes liquid crystal coatings on the lenses that may be operated to be transparent or not transparent.

US 4 715 702 A generally discloses a decorative lens for use in a pair of eyeglasses.

FR 2 684 770 A1 generally discloses a pair of adjustable eyeglasses.

US Patent 4,756,605, to Okada, et al., dated July 12, 1988, entitled, "Liquid crystal spectacles," whose disclosure is incorporated herein by reference, discloses a liquid crystal spectacle, which includes a pair of liquid-crystal, lenses and a frame holding the lenses. The frame has a pair of temples and a pair of earpieces attached individually to the temples. Each earpiece houses a battery for supplying the voltage to the corresponding lens. Each temple houses a regulator circuit for regulating the voltage supplied from the battery to the lens, thereby controlling the refractive index of the lens.

US Patent 5,552,841, to Gallorini, et al., dated September 3, 1996, entitled, "Liquid-crystal eyeglasses," whose disclosure is incorporated herein by reference, discloses an optical instrument comprises at least one lens and application means for applying the optical device. The lens is formed at least in part by a liquid crystal device (LCD); power supply means of regulating voltage are provided, to control the transparency of the lens. Specifically, the lenses are of variable transparency, and voltage is applied to the lenses via a regulator, which controls the voltage output, thus the transparency of the lenses.

US Patent 5,608,567, to Grupp, dated March 4, 1997, entitled, "Variable transparency electro-optical device," whose disclosure is incorporated herein by reference, discloses a variable transparency electro-optical device comprising: at least one lens formed by an electro-optical cell comprising a first plate and a second plate each provided with a control electrode volume enclosing an electro-optical material, voltage generating means connected to the electrodes to apply a variable voltage to the material in order to automatically or manually vary the transmission of the cell as a function of the ambient light. According to the invention the cell comprises at least one element.charged with a photochromic substance having an absorption that varies in reversible manner as a function, of the intensity of the light impinging on the cell. The invention has particular applications in devices for protecting the eyes.

And yet, children are sensitive to peer pressure, and glasses that look different from what is acceptable, like a patch, will meet with resistance. There is thus a widely recognized need for, and it would be highly advantageous to have, liquid-crystal, electronically controlled glasses, devoid of the above limitation.

## SUMMARY OF THE INVENTION

In accordance with one aspect of the present invention, there is provided a liquid-crystal eyeglass system as defined in claim 1.

In accordance with an additional aspect of the present invention, said at least one liquid crystal lens is integrated with a lens for corrective vision.

In accordance with an additional aspect of the present invention, said at least one liquid-crystal lens further includes two liquid-crystal lenses, adapted for variable opacity, and having reflective coatings on their exterior sides, for providing said lenses with substantially invariant exterior appearance, under different levels of said variable opacity, so that to an observer, said two lenses look substantially alike, wherein said control system controls the levels of said variable opacity of said two liquid-crystal lenses.

In accordance with an additional aspect of the present invention, each of said two liquid-crystal lenses is independently controlled by said control system.

In accordance with an additional aspect of the present invention, said two liquid crystal lenses are integrated with lenses for corrective vision.

In accordance with an additional aspect of the present invention, said system is selectively operative also as sunglasses.

In accordance with an additional aspect of the present invention, said system further includes a power source, for powering said control system.

In accordance with an additional aspect of the present invention, said system further includes a fashionable designer's brand name, imprinted on said liquid-crystal eyeglass system.

In accordance with an additional aspect of the present invention, said at least one sensor is operative to automatically activate said liquid-crystal eyeglass system, when sensing that said liquid-crystal eyeglass system is being worn.

In accordance with an additional aspect of the present invention, said data storage unit is adapted to record at least one parameter, selected from the group consisting of: date, wearing time on that date, duration of the occlusion-and-exercising session on that date, and a combination thereof.

In accordance with an additional aspect of the present invention, said variable opacity has two levels, transparent and opaque.

In accordance with an alternative aspect of the present invention, said system further includes a voltage regulator, coupled to said at least one liquid-crystal lens, for varying a level of said variable opacity by varying a voltage input.

In accordance with an additional aspect of the present invention, the level of said variable opacity may be varied gradually.

In accordance with an additional aspect of the present invention, said system further includes a light sensor for sensing the amount of ambient light, wherein occlusion is gray-level occlusion, and the level of said variable opacity is increased responsive to the amount of ambient light.

In accordance with an additional or an alternative aspect of the present invention, a pulse generator is coupled to said at least one liquid-crystal lens, for varying a level of said variable opacity by varying a pulse frequency.

In accordance with an additional aspect of the present invention, the level of said variable opacity may be varied gradually.

In accordance with an additional aspect of the present invention, said system further includes a light sensor for sensing the amount of ambient light, wherein occlusion is gray-level occlusion, and the level of gray of level of said variable opacity is increased responsive to the amount of ambient light.

In accordance with an additional aspect of the present invention, said control system is further designed to communicate with a computerized implement, selected from the group consisting of a dedicated computerized implement, a palm top, a PDA, a laptop, and a personal computer.

In accordance with an additional aspect of the present invention, said computerized implement is adapted to retrieve information from said control system.

In accordance with an additional aspect of the present invention, said computerized implement is adapted to communicate to the user.

In accordance with an additional aspect of the present invention, said computerized implement is adapted to provide feedback on compliance to the user.

In accordance with an additional aspect of the present invention, said computerized implement is adapted to receive communication from the user.

In accordance with an additional aspect of the present invention, said computerized implement is formed as a toy.

In accordance with an additional aspect of the present invention, said control system is further designed to communicate with said computerized implement in a wireless manner.

In accordance with an additional aspect of the present invention, said computerized implement is designed to communicate with a distant clinic.

In accordance with an additional aspect of the present invention, each of said at least one liquid crystal lese may be opaque for a far field while transparent for a near field.

The present invention successfully addresses the shortcomings of the presently known configurations by providing an electronically controlled, liquid-crystal eyeglass system, designed for intermittent occlusion, while exercising the eyes of a user, through combined occlusion-and-exercising sessions, wherein the eyeglass system includes features to improve and monitor compliance. Specifically, features to improve compliance include an ordinary eyeglass design, wherein the electronic components are miniaturized and hidden, and a reflective coating on the exterior surfaces of the lenses, for identical exterior appearance, even when the two lenses operate at different opacity levels. In this manner, the liquid-crystal eyeglass system does not attract attention. Additionally, a fashionable design, and possibly also, a fashionable designer's brand name may be employed. In order to monitor compliance, the times, dates, and durations of the occlusion-and-exercising sessions that took place are recorded by the system. A computerized implement is provided, to present feedback to the user, preferably, in a playful manner.

The liquid-crystal eyeglass system may be used in the treatment of amblyopia, strabismus, and a weak eye, and may be integrated with sunglasses and (or) with glasses for corrective vision.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

Implementation of the method and system of the present invention involves performing or completing selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

## BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

FIGs. 1A - 1E schematically illustrate liquid-crystal eyeglass systems, in accordance with preferred embodiments of the present invention;

FIGs. 2A - 2E schematically illustrate computerized implements for operation with the liquid-crystal eyeglass system, in accordance with preferred embodiments of the present invention;

FIGs. 3A - 3F schematically illustrate the liquid-crystal eyeglass system together with the computerized implements, in accordance with preferred embodiments of the present invention;

FIG. 4 schematically illustrates the computerized implement when in communication with a distant clinic, in accordance with a preferred embodiment of the present invention; and
FIGs. 5A and 5B schematically illustrate a liquid-crystal lens operative with a corrective lenses, in accordance with a preferred embodiment of the present invention.

## DESCRIPTION OF THE PREFERRED EMBODIMENTS

The present invention is of an electronically controlled, liquid-crystal eyeglass system, designed for intermittent occlusion, while exercising the eyes of a user, through combined occlusion-and-exercising sessions, wherein the eyeglass system includes features to improve and monitor compliance. Specifically, features to improve compliance include an ordinary eyeglass design, wherein the electronic components are miniaturized and hidden, and a reflective coating on the exterior surfaces of the lenses, for identical exterior appearance, even when the two lenses operate at different opacity levels. In this manner, the liquid-crystal eyeglass system does not attract attention. Additionally, a fashionable design, and possibly also, a fashionable designer's brand name may be employed. In order to monitor compliance, the times, dates, and durations of the occlusion-and-exercising sessions that took place are recorded by the system. A computerized implement is provided, to present feedback to the user, preferably, in a playful manner.

The liquid-crystal eyeglass system may be used in the treatment of amblyopia, strabismus, and a weak eye, and may be integrated with sunglasses and (or) with glasses for corrective vision.

The principles and operation of the liquid-crystal eyeglass system, according to the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

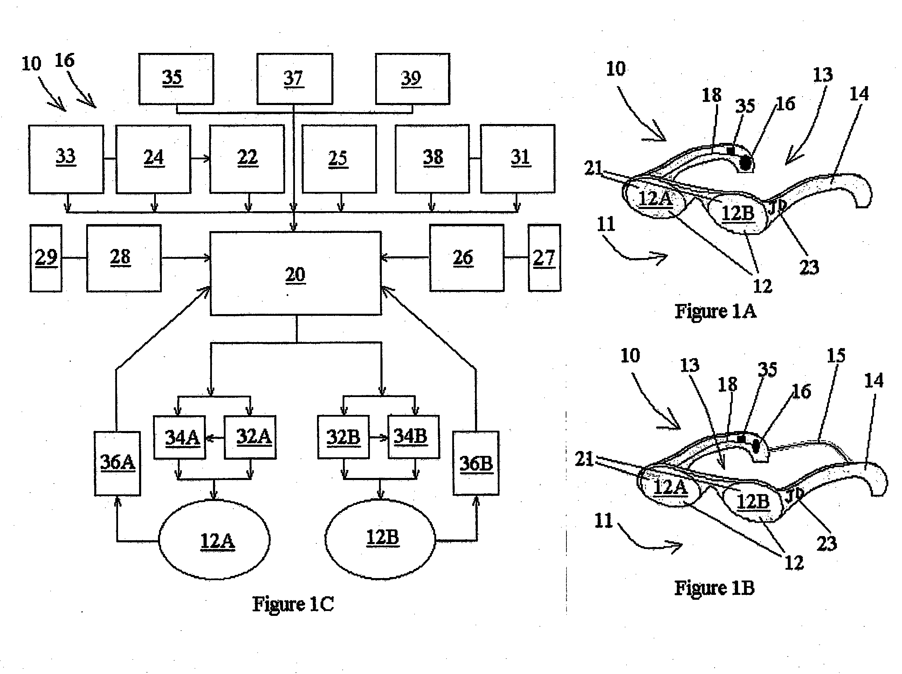

Referring now to the drawings, Figures 1A - 1E schematically illustrate a liquid-crystal eyeglass systems 10, in accordance with preferred embodiments of the present invention.

As seen in Figures 1A and 1B, liquid-crystal eyeglass system 10 includes a frame 14, two liquid-crystal lenses 12, denoted 12A and 12B, arranged in frame 14, so as to substantially encompass all the visual field of a user, and possibly also a strap 15 (Figure 1B). Preferably, frame 14 is formed of a plastic, a metal, or another suitable material, as known. Preferably, different sizes are provided, adapted to different age groups between about 4 and about 10 years old. Frame 14 defines an exterior side 11 and an interior side 13, which is generally invisible to people other than the user.

In accordance with a preferred embodiment of the present invention, liquid-crystal lenses 12A and 12B are formed of glass, which is preferably shatterproof. Alternatively, they may be formed of plastic, which is preferably unbreakable, or of any other transparent polymer, or of another transparent material, as known. Preferably the thickness of lenses 12A and 12B is about 1.5 mm. It will be appreciated that other values may similarly be used.

Liquid-crystal lenses 12A and 12B have variable opacity and are adapted to alternate between maximum and minimum opacity levels, which for simplicity will be referred to as opaque and transparent, responsive, for example, to their respective input voltages. Preferably, liquid-crystal lenses 12A and 12B are further adapted to gradually change between opaque and transparent, through levels of gray, so a child is not exposed to light suddenly. Additionally, gradual transition is preferably provided also between transparent and opaque, so the user does not loose stereovision suddenly. For occlusion of a single eye, one lens is generally opaque, while the other is generally transparent.

It will be appreciated that when at their maximum transparency level, the liquid-crystal lenses 12A and 12B are not completely transparent. Rather, at their maximum transparency level, they are about 80 - 95 percent transparent.

A key feature of the present invention is that the exterior sides of liquid-crystal lenses 12A and 12B are coated with a reflective coating 21, so that from exterior side 13, the two lenses appear substantially identical, even when operating at different opacity levels. This feature is important in order to win the child's cooperation. While glasses that have one dark lens and one transparent lens suggest some abnormality and are likely to attract attention and possibly even lead to mocking and jeering from peers, glasses with a reflective coating hide their special character and are generally considered "cool."

It is furthermore stressed that while the prior art addresses the issue of compliance via monitoring, consultation and possibly even coercion by parents, the prior art ignores a simple issue - children may be embarrassed to wear glasses that make them stand out as different. Additionally, they may suffer by these glasses, which are probably unacceptable, socially. Therefore, the present invention provides eyeglasses for the treatment of amblyopia, strabismus, and a weak eye, which hide their true nature and appear ordinary to an observer. Reflective coating 21 plays an important part in making this possible, giving lenses 12A and 12B substantially identical appearance, even when operating at different opacity levels.

A second important feature of the present invention is that frame 14 is preferably fashionably designed and may further include a designer's brand name 23, for example, imprinted on an exterior side of frame 14, by the temple.

As such, liquid-crystal eyeglass system 10, whose special character is hidden, may be considered desirable, and "in". A child will then be less likely to resist wearing them.

Liquid-crystal eyeglass system 10 further includes a control system 16 for operating liquid-crystal lenses 12A and 12B and a connecting means 18 between control system 16 and lenses 12A and 12B. Preferably, control system 16 and connecting means 18 are embedded in frame 14, or arranged on the interior side of strap 15, or otherwise arranged on interior side 13 so as to be invisible to people other than the user.

Furthermore, liquid-crystal eyeglass system 10 includes a switch 35, which allows the user to turn the glasses off, when necessary. Preferably, control system 16 will restart the glasses automatically after a predetermined period, for example, after 15 minutes, or after 30 minutes.

As seen in Figure 1C, control system 16 of liquid-crystal eyeglass system 10 includes a control unit 20, in communication with each of liquid-crystal lens 12A and 12B, for controlling the opacity level of each lens, a data storage unit 26, coupled to control unit 20, for maintaining a follow-up of the liquid-crystal lens activity, and a power source 28, for powering control system 16. Preferably, a power connector 29 is provided for recharging power source 28, and an electronic connector 27 is provided for downloading data from data storage unit 26. Control unit 20 may be, for example, a dedicated control circuitry, a processor, an Application Specific Integrated Circuit (ASIC), or a microcomputer.

Preferably, control unit 20 is programmable. Preferably, it is preprogrammed for an initial treatment stage, and may be reprogrammed to different treatment stages, as therapy progresses. Alternatively, control unit 20 is replaceable, and may be replaced, as therapy progresses. Alternatively, control unit 20 includes a replaceable component that is preprogrammed for an initial treatment stage, and that component is replaced, as treatment progresses.

Additionally, control system 16 may include two voltage regulators 32A and 32B, operative as lens drivers, each arranged so as to receive input signals from control unit 20 and drive lenses 12A and 12b, respectively. Preferably, lenses 12A and 12B are of variable opacity level, responsive to the voltage level, and voltage regulators 32A and 32B are operative to control the opacity level of the lenses, by regulating voltage input to each lens for example, as taught by US Patent 6,511,175, to Hay, et al., and US Patent 5,552,841, to Gallorini, et al., both of whose disclosures are incorporated herein by reference.

Additionally or alternatively, control system 16 may include two pulse generators 34A and 34B, operative as lens drivers, each arranged so as to receive input signals from control unit 20 and drive lenses 12A and 12b, respectively, controlling opacity level of lenses 12A and 12B, by regulating the pulse frequency to each lens, for example, as taught by US Patent 6,511,175, to Hay, et al.

Accordingly, lenses 12A and 12B may be driven independently of one another by variable frequency pulse generators 34A and 34B, and may be driven at frequencies, which are adjustable from 0 to about 10,000 Hz or more. Such frequencies may be in the form of a pulse train, wherein very short pulses are developed, with the spacing between the pulses being adjustable. As such, where lenses 12A and 12B are driven to an opaque state upon occurrence of a pulse and revert to a transparent state in the absence of a pulse, lenses 12A and 12B become increasingly opaque with increasing frequency, i.e. the pulses being squeezed more closely together. It is anticipated that the user would not see the discrete transitions between transparent and opaque, the frequency being above that of flicker fusion, which is generally about 60 Hz or so. Instead, the user would see a general lightening or darkening of lenses 12A and 12B. Furthermore, the frequency of pulse generators 34A and 34B may be adjustable, so that the degree of opacity may be adjusted over time as the subject is treated. Furthermore, lenses 12A and 12B may be maintained, in a static clear or opaque state by providing a steady state signal to lenses 12A and 12B. Thus, vision in one or the other eye of the user may be selectively blocked entirely, or may be controllably reduced as needed.

It will be appreciated that pulsation may be carried out between maximum and minimum opacity levels, or between a specific shade of gray and a minimum opacity level, by coupling voltage regulators 32A and 32B and their respective pulse generators 34A and 34B.

Furthermore, control system 16 may include a light sensor 25, such as a photodetector 25 or a photocell 25 to detect the amount of ambient light. Preferably, gray-level occlusion may be employed, and the level of gray, that is, the extent of blocking, may be increased, responsive to the amount of ambient light, sensed by sensor 25. For example, when in the bright sun, complete blocking may be applied, whereas indoors, a medium gray occlusion may be sufficient.

Additionally, control system 16 includes at least one sensor 24, operative to determine if liquid-crystal eyeglass system 10 is being worn. Sensor 24 may be a temperature sensor, as known, located on the interior of frame 14, for sensing body heat. Additionally or alternatively, sensor 24 may be a capacitance sensor, a pressure sensor, a tension sensor, or another sensor adapted to sense that the glasses are being worn. For example, sensor 24 may be mounted on strap 15 and adapted to sense the stretching of strap 15 by tension.

Preferably, sensor 24 is operative to automatically activate liquid-crystal glasses 10, when worn. Thus, liquid-crystal glasses 10 are generally always active, when on, and a lack of compliance because the user forgot to turn liquid-crystal eyeglass system 10 on is eliminated.

Preferably, a timing device 22, in communication with sensor 24 and with control system 20 is operative to determine the times, dates, and durations of wearing liquid-crystal eyeglass system 10, and the times, dates, and durations of the occlusion-and-exercising sessions that took place, when liquid-crystal eyeglass system 10 was worn. It will be appreciated that occlusion-and-exercising sessions are applied for only during a portion of the time that liquid-crystal eyeglass system 10 is worn. During the therapy-free time, liquid-crystal eyeglass system 10 may be used as regular eyeglasses or as sunglasses.

As has been pointed out, control system 16 may also include switch 35, which may override the automatic activation of sensor 24, to allow the user to turn liquid-crystal eyeglass system 10 off, when necessary. Preferably, control system 16 will restart the liquid-crystal eyeglass system 10 automatically after a predetermined period, for example, after 15 or 30 minutes. Preferably, timing device 22 and control system 20 are adapted to time and account for the "off periods" set by switch 35.

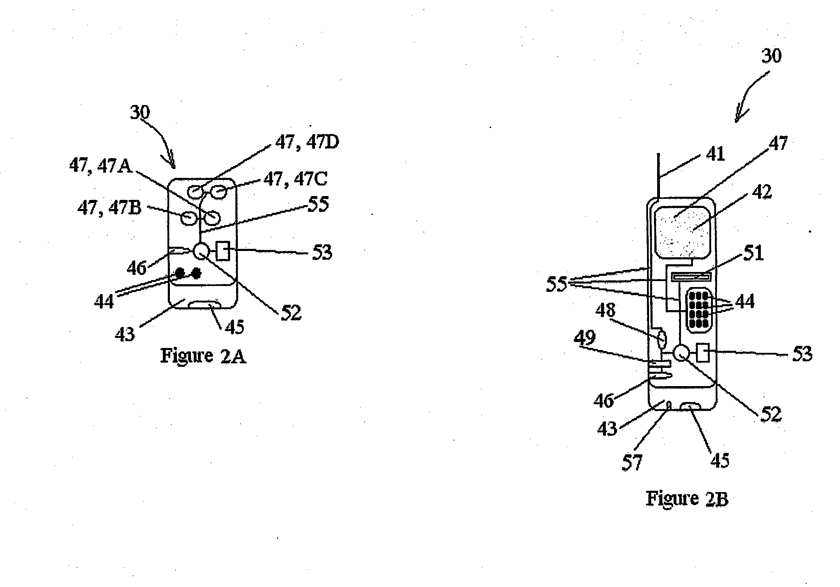

Additionally, control system 16 may include a feedback feature 37, such as at least one light, a beep generator, or a sound generator. Alternatively, feedback is provided by a computerized implement 30, described hereinbelow, in conjunction with Figures 2A - 2E.

Additionally, control system 16 may include a feature 39, for alerting the user to a change in the operation of liquid-crystal eyeglasses 10, for example, that the occlusion-and-exercising session is about to begin or to end. Alerting may be performed by a beep, by another sound, or by speech

Furthermore, control system 16 may include a feature 31, such as a beep, to remind the user to put the glasses on, for example, if on school days, by a certain hour, the user has not done so already.

Additionally, control system 16 may include a switch to switch the glasses to sunglasses during the therapy-free time.

Furthermore, control system 16 may include a transceiver 38, for wireless communication with computerized implement 30, described hereinbelow, in conjunction with Figures 2A - 2B.

The treatment of amblyopia, weak eye, and strabismus, in accordance with the present disclosure, incorporates the old-fashioned patching principle with eye-exercising programs by performing various manners of intermittent occlusion, termed herein: occlusion-and-exercising sessions.

Additionally, the occlusion-and-exercising sessions are designed to avoid predictability. This is done by using a plurality of time intervals, preferably between three and ten each, for occlusion and for no occlusion. For example, six time intervals may be provided for occlusion $t_{OCC-1}$ - $t_{OCC-6}$ and six time intervals may be provided for no occlusion $t_{NO-1}$ - $t_{NO-6}$. When the number of intervals is large enough, for example, greater than three, predictability is avoided, even if the intervals are used in sequence. It will be appreciated that the number of occlusion and no occlusion intervals need not be equal, and that a greater number of intervals, for example, 20 or 431 may be used.

Thus, in accordance with the present disclosure, a session, which may last, for example, between 20 minutes and ten hours, is constructed of a repeated sequence of occlusion and no-occlusion intervals, for example, as follows:

$$t_{OCC-1} - t_{NO-1} - t_{OCC-2} - t_{NO-2} - t_{OCC-3} - t_{NO-3} - t_{OCC-4} - t_{NO-4} - t_{OCC-5} - t_{NO-5} - t_{OCC-6} - t_{NO-6} \ t_{OCC-1} \ t_{NO-1} - t_{OCC-2} - t_{NO-2}$$
$$- t_{OCC-3} - " \ t_{NO-3} \ t_{OCC4} - t_{NO-4} - t_{OCC-5} - t_{NO-5} - t_{OCC-6} - t_{NO-6} \ t_{OCC-1} - t_{NO-1} - t_{OCC-2} - t_{NO-2} - t_{OCC-3} - t_{NO-3} - t_{OCC-4} - t_{NO-4} \cdots$$

Preferably, occlusion time intervals $t_{OCC}$ are between 10 and 900 seconds each, and no occlusion time intervals $t_{NO}$ are between 30 and 300 seconds each. Preferably, gradual transitions $t_{TR}$ are provided as least between the intervals of occlusion, $t_{OCC}$ and the intervals of no occlusion $t_{NO}$, so a child is not faced with a sudden exposure to light. Additionally, gradual transition is preferably provided also between no occlusion and occlusion, so the user does not loose stereovision suddenly. Gradual transitions $t_{TR}$ may be between 5 and 30 seconds, but may be maintained at a constant value. Thus, in actuality, a session may be constructed as follows:

$$t_{OCC-1} - t_{TR} - t_{NO-1} - t_{TR} - t_{OCC-2} - t_{TR} - t_{NO-2} - t_{TR} - t_{OCC-3} - t_{TR} - t_{NO-3} - t_{TR} - t_{OCC-4} - t_{TR} - t_{NO-4} - t_{TR} - t_{OCC-5} - t_{TR} -$$
$$t_{NO-5} - t_{TR} - t_{OCC-6} - t_{TR} - t_{NO-6} - t_{TR} - t_{OCC-1} - t_{TR} - t_{NO-1} - t_{TR} - t_{OCC-2} - t_{TR} - t_{NO-2} - t_{TR} - t_{OCC-3} - t_{TR} - t_{NO-3} - t_{TR} -$$
$$t_{OCC-4} - " \ t_{TR} - t_{NO-4} - t_{TR} - t_{OCC-5} - t_{TR} - t_{NO-5} - t_{TR} - t_{OCC-6} - t_{TR} - t_{NO-6} - t_{TR} - t_{OCC-1} - t_{TR} - t_{NO-1} \cdots$$

It will be appreciated that gradual transitions $t_{TR}$ may also be employed between no occlusion and occlusion intervals.

Alternatively, a random order is applied, in place of the repeated sequence, for example:

$$t_{OCC-4} - t_{TR} - t_{NO-2} - t_{OCC-5} - t_{TR} - t_{NO-3} - t_{OCC-2} - t_{TR} - t_{NO-1} - t_{OCC-4} - t_{TR} \ t_{NO-6} \ t_{OCC-5} - t_{TR} - t_{NO-1} - t_{OCC-4} - t_{TR} - t_{NO-2}$$
$$- t_{OCC-3} - t_{TR} - t_{NO-1} \cdots$$

Amblyopia treatment is preferably employed in stages, which may be constructed as follows:

i. An initiating stage: The initiating stage is preferably employed during the first few weeks of treatment. During the initiating stage, the occlusion-and-exercising session each day is relatively short, preferably about three hours a day, occlusion intervals $t_{OCC}$ are relatively short, preferably, less than 100 seconds, and no occlusion intervals are relatively long, preferably greater than 60 seconds.

ii. A core stage: The core stage is preferably employed following the initiating stage, for between several months and about a year, or possibly longer. It represents the bulk of the treatment. During the core stage, the occlusion-and-exercising session each day is relatively long, preferably about eight hours a day, occlusion intervals $t_{OCC}$ are relatively long, preferably, greater than 60 seconds, and no occlusion intervals are preferably between 30 and 600 seconds.

iii. A maintenance stage: The maintenance stage is preferably employed following the core stage, for about 1 year. It will be appreciated that shorter or longer periods are also possible. During the maintenance stage, the occlusion-and-exercising session each day is very short, preferably about one hour a day, occlusion intervals $t_{OCC}$ are relatively long, preferably, greater than 60 seconds, and no occlusion intervals are preferably between 30 and 600 seconds.

It will be appreciated that the occlusion-and-exercising session each day may be broken up into several sessions, whose duration is as that of the recommended daily session, provided they are applied during the same day.

As has been pointed out hereinabove, control unit 20 is preferably programmable, or replaceable, or has a replaceable component, to incorporate the different treatment stages, as therapy progresses. Preferably, the attending physician performs the programming or replacement.

In accordance with the present invention, two compliance parameters may be defined by control unit 20, for providing feedback to the user, the parents, and the attending physician, as follows:

i. a daily compliance feedback, defined as:

$$\frac{\text{actual, total session duration, during a day}}{\text{recommended session duration, during that day}}$$

ii. an accumulative compliance feedback, defined as:

$$\frac{\text{accumulative session duration, from the beginning of the stage}}{\text{recommended accumulative session duration, for that stage}}$$

As has been pointed out hereinabove, control system 16 may provide a feedback to the user. For example, control system 16 may include feedback feature 37, such as a beep generator. As the user removes the glasses in the evening, and sensor 24 senses their removal, control system 16 may issue beeps, in accordance with a predetermined code. For example:

i. a single short beep may indicate that daily compliance has been good;
ii. two short beeps may indicate that accumulative compliance has been good;
iii. three short beeps may indicate that the two accumulative parameters have been good.

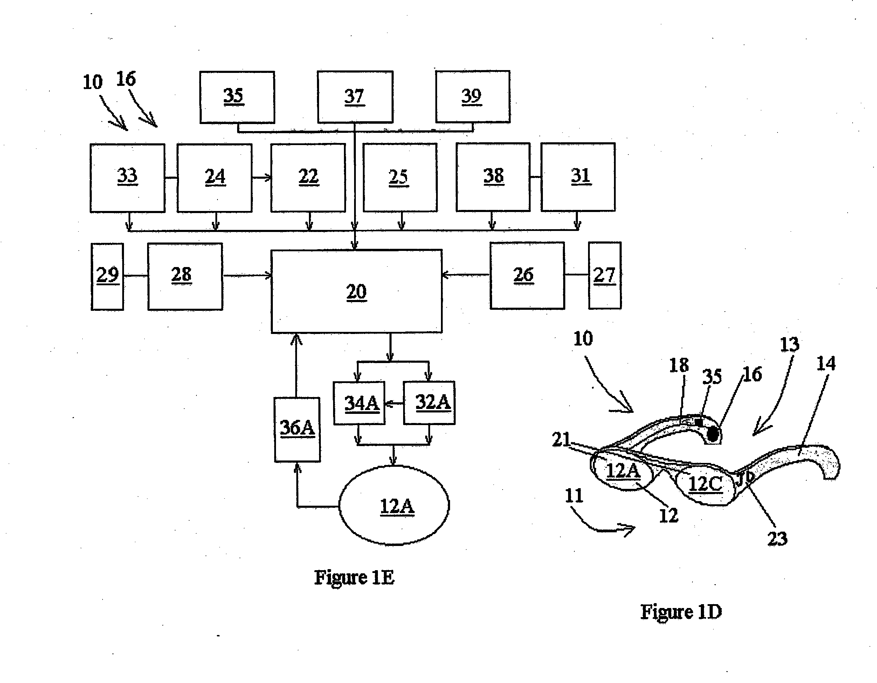

Figure 1D schematically illustrates liquid-crystal eyeglass system 10 which includes a single liquid-crystal lenses 12A and an ordinary glass or plastic lens 12C, arranged in frame 14. Ordinary glass or plastic lens 12C may be transparent, or partly opaque. Preferably it includes reflective coating 21, so that its external appearance is the same as that of liquid-crystal lenses 12A.

Figure 1E schematically illustrate control system 16 adapted for controlling only liquid-crystal lens 12A.

Referring further to the drawings, Figures 2A - 2E schematically illustrate computerized implements 30 for operation with liquid-crystal eyeglasses 10, in accordance with preferred embodiments of the present invention

In accordance with a first embodiment, seen in Figure 2A, computerized implement 30 may be a box 30, preferably, designed to remain at the bedside or on the desk of the user. Preferably, computerized implement 30 has two objectives:

i. retrieving information from data storage unit 26 of control system 16 (Figure 1C), regarding occlusion-and-exercising session times and duration and possibly also, wearing times and duration during the day; and
ii. calculating the two compliance parameters and providing feedback to the user, or to others, such as his parents and the attending physician, on the two compliance parameters.

Computerized implement 30 preferably includes a second control unit 52, which may also be a dedicated control circuitry, a processor, an Application Specific Integrated Circuit (ASIC), or a microcomputer. Additionally, computerized implement 30 preferably includes a memory 53. Furthermore, computerized implement 30 preferably includes at least one control button 44, a connector 46, for connecting with electronic connector 27 (Figure 1C) of control system 16, or for connecting to a computer system (not shown), connector 46 preferably being a USB connector, connecting wires 55, a preferably rechargeable battery 43, and a plug 45 for recharging battery 43. A connector 57 may be used for recharging power source 28 (Figure 1C) of control system 16, via its power connector 29. It will be appreciated that computerized implement 30 may include only some of these elements.

Preferably, computerized implement 30 further includes at least one feedback feature 47, such as at least one light, a sound generator, or a beep generator. Preferably, a feedback code is employed. For example, where light is used for feedback, two pairs of lights may be provided, a green light 47A, to indicate acceptable daily compliance, a red light 47B, to indicate a lack thereof, a green light 47C, to indicate acceptable accumulative compliance, and a red light 47D, to indicate a lack thereof.

It will be appreciated that many other forms of feedback may be employed, for example, by sound, such as with beeps, with melodies, or with speech. Alternatively, feedback may be provided with a printout, or by any other known manner.

Preferably, at nighttime, the user removes liquid-crystal eyeglasses 10 and connects them to computerized implement 30, and feedback is provided. Preferably, feedback may be provided on demand, using control button 44. Alternatively, feedback is provided automatically, when liquid-crystal eyeglass system 10 is connected to computerized implement 30. It will be appreciated that a parent or an attending physician may also obtain feedback, upon request.

In accordance with a second embodiment, seen in Figures 2B, computerized implement 30 may be further operative as a remote control, for providing communication between the user and liquid-crystal eyeglass system 10, for at least, the following:

i. retrieving information from data storage unit 26 of control system 16, as in the previous embodiment, but preferably in a wireless manner;
ii. calculating the two compliance parameters and providing feedback to the user, as in the previous embodiment;
iii. alerting the user to a change in the operation of liquid-crystal eyeglass system 10, for example, that the occlusion-and-exercising session is about to begin or to end, wherein alerting may be performed by a beep, by another sound, or by speech, in place of, or in addition to feature 39 of control system 16 (Figure 1C);
iv. reminding the user to put the glasses on, preferably, around the time of rising, for example by a beep, by another sound, or by speech, in place of, or in addition to feature 31 of control system 16 (Figure 1C);
v. enabling the user to choose a desired program, which he is entitled to, for example sunglasses, as opposed to transparent glasses, and the extent of grayness of the sunglasses, for the therapy-free time, in place of, or in addition to feature 33 of control system 16 (Figure 1C); and
vi. discontinue the operation of the glasses, in place of, or in addition to switch 35 of control system 16 (Figures 1A - 1C).

As in the previous embodiment of Figures 2A, computerized implement 30 preferably includes second control unit 52, memory 53, control buttons 44, connector 46, for connecting with electronic connector 27 (Figure 1C) of control system 16, or for connecting to a computer system (not shown), wires 55, preferably rechargeable battery 43, plug 45 for recharging battery 43, and connector 57 for recharging power source 28 (Figure 1C) of control system 16, via its power connector 29.

Additionally, in accordance with the present embodiment, computerized implement 30 preferably includes a display panel 42.

Furthermore, in accordance with the present embodiment, computerized implement 30 preferably includes a transmitter 48, operable by RF or IR, which may further operate as a transceiver 48, for communication with liquid-crystal eyeglass system 10, in a wireless manner. Preferably, computerized implement 30 further includes an antenna 41. It will be appreciated that communication may be by the BlueTooth protocol. It will be appreciated that a separate receiver may be used.

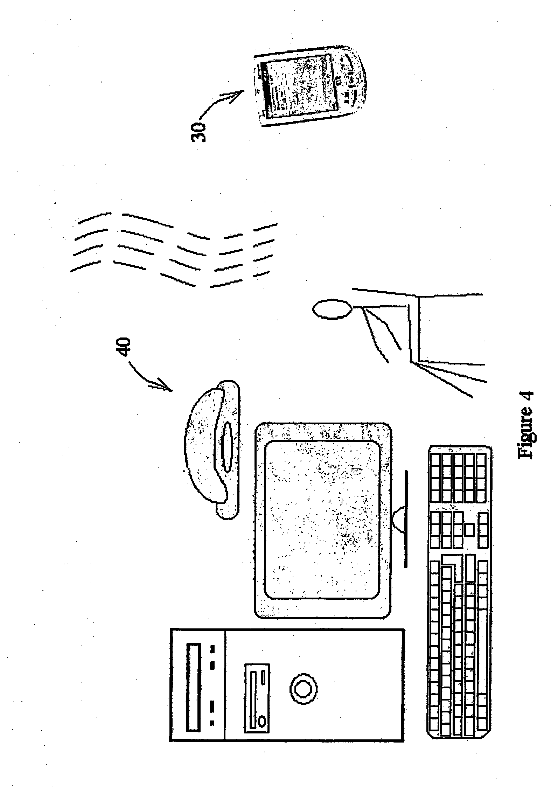

Additionally, in accordance with the present embodiment, computerized implement 30 preferably includes a modem 49, for telephone communication with a distant clinic 40, or a call center, associated with a clinic, described hereinbelow, in conjunction with Figure 4. In this manner, programming of control unit 20 may be done remotely.

Furthermore, in accordance with the present embodiment, computerized implement 30 preferably includes a drive 51 for a removable data storage device, preferably being a read-write drive 51, such as a diskette drive, a minidisk drive, or the like. Drive 51 may be used for installing new programs, for programming control unit 20, and for transferring data from computerized implement 30 to another computer.

It will be appreciated that computerized implement 30 may include only some of these elements.

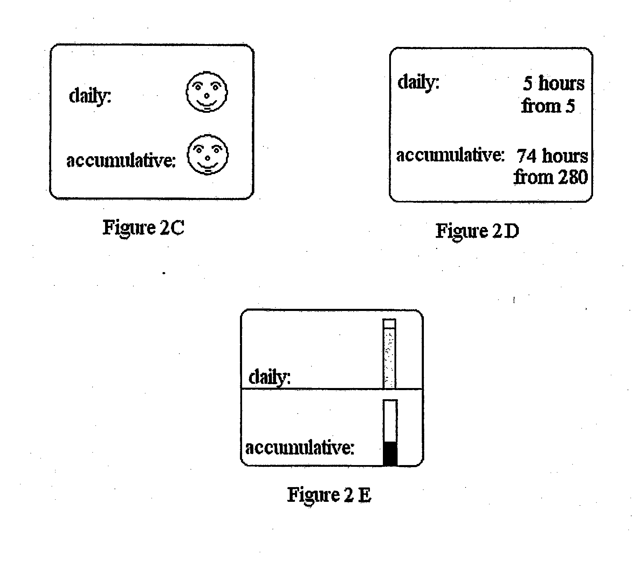

As seen in Figures 2C - 2E, feedback feature 47 may be provided by display panel 42. It may be provided with pictures, in writing, or graphically. For example, as seen in Figure 2C, two smileys are produced, one each for the two compliance parameters to indicate good compliance for both parameters. Alternatively, as seen in Figure 2D, a numerical feedback is provided, for example, daily: 5 hours, or 5 hours from 5 hours, accumulative 78 hours from 280 hours. Alternatively, as seen in Figure 2E, a graphical feedback is provided.

Alternatively other manners of feedback, such as speech or music may be used.

For example, computerized implement 30 may be provided with speech, and may even be programmed to include the user's name. The library of sentences may include, for example, "Dan, you were great today!" "Dan, put me on!" "The session is about to begin." Other sentences may be used, as relevant.

In accordance with the present embodiment, computerized implement 30 may be, for example, a dedicated computerized implement, a palm top, a PDA, a laptop, or a personal computer.

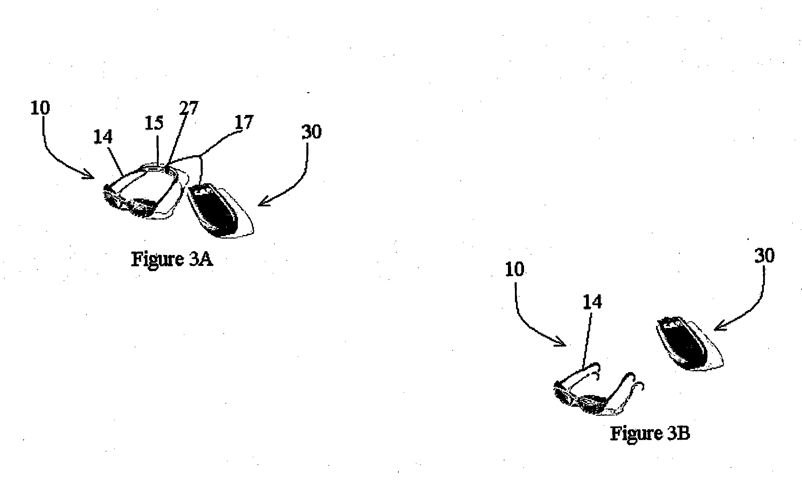

Referring further to the drawings, Figures 3A - 3F schematically illustrate liquid-crystal eyeglass system 10 and computerized implement 30, in accordance with preferred embodiments of the present invention.

As seen in Figure 3A, computerized implement 30 may be coupled to liquid-crystal eyeglass system 10 via a cable 17 and electronic connector 27.

Alternatively, as seen in Figures 3B, liquid-crystal glasses 10 may communicate with computerized implement 30 in a wireless manner, such as by RF or IR, for example, using the "BlueTooth" protocol.

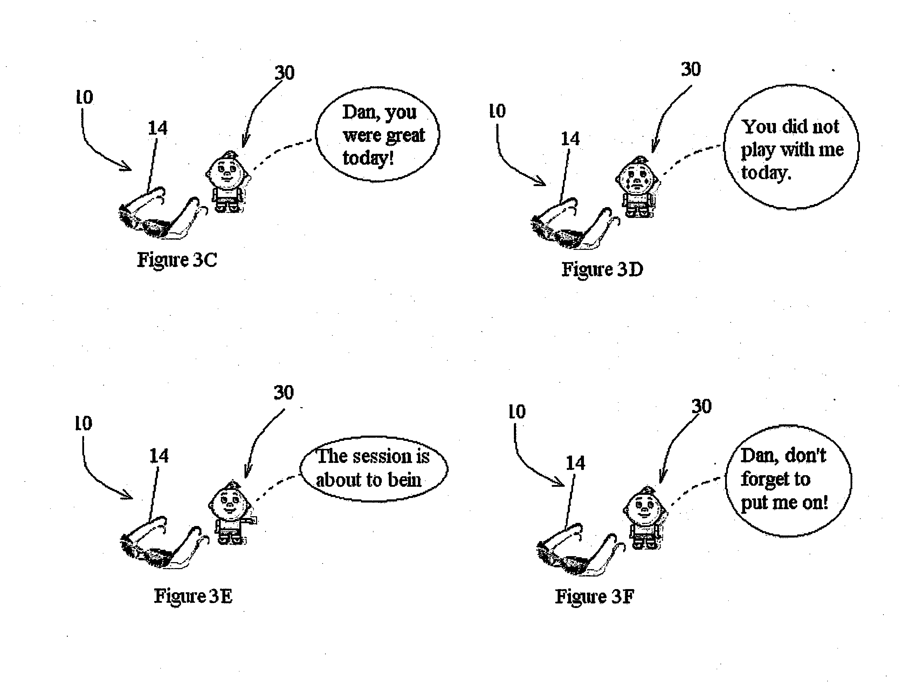

As seen in Figures 3C - 3F, communication between the user and computerized implement 30 of liquid-crystal eyeglass system 10 may be provided in a playful manner. For example, computerized implement 30 may be shaped as a doll, possibly even, in the shape of a known character, such as Mickey Mouse, or Winnie the Pooh. Doll 30 may be programmed for speech, and may compliment the user on good performance (Figure 3C) or comment sadly on poor performance (Figure 3D). Doll 30 may also alert the user to the beginning of an occlusion-and-exercising session (Figure 3E), and remind the user to put liquid-crystal eyeglass system 10 on (Figure 3F).

Alternatively, doll 30 may have facial expressions and may put on a happy face, on good performance (Figure 3C), and a melancholy face for poor performance (Figure 3D).

Furthermore, in accordance with the present invention, doll 30 may be a "Tamacuchi"-like toy that can get sick if the user does not take care for it, by using liquid-crystal eyeglass system 10 as prescribed. Feeding and caring for "Tamacuchi" 30 occurs by proper use of liquid-crystal eyeglass system 10.

In accordance with the present invention, doll 30 or Tamacuchi 30 are intended to improve compliance by introducing a toy and the elements of a game to the treatment.

Referring further to the drawings, Figure 4 schematically illustrates computerized implement 30, when in communication with a distant clinic 40, in accordance with a preferred embodiment of the present invention. Preferably, computerized implement 30 is adapted for communication with distant clinic 40, for automatically reporting to the clinic relevant information, such as daily and accumulative compliance parameters. Furthermore, computerized implement 30 may be adapted for programming control unit 20 (Figure 1C), based on remote input from distant clinic 40.

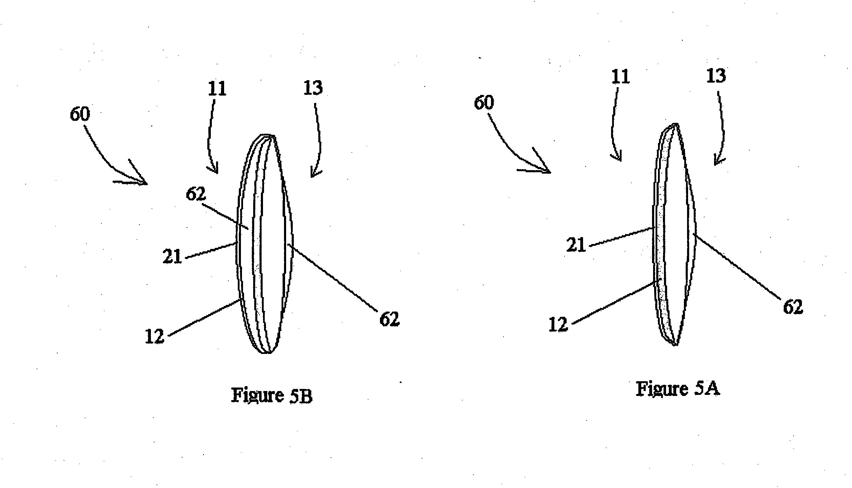

Referring further to the drawings, Figures 5A and 5B schematically illustrate a lens 60, adapted for corrective vision.

As seen in Figure 5A, lens 60 includes liquid-crystal lens 12 and a corrective lens 62. The liquid-crystal lens 12 and corrective lens 62 are integrated together, for example, glued together with an optical transparent glue. Alternatively they may be pressed together and fitted together into a frame.

Alternatively, as seen in Figure 5B, lens 60 includes liquid-crystal lens 12 sandwiched between two corrective lenses 62. Again, the liquid-crystal lens 12 and corrective lenses 62 are integrated together, for example, glued together with an optical transparent glue. Alternatively they may be pressed together and fitted together into a frame.

Thus, in accordance with the present invention, liquid-crystal eyeglass system 10 may be operative also as eyeglasses for corrective vision. Alternatively, liquid eyeglasses 10 may be used in tandem with contact lenses.

Additionally, liquid-crystal eyeglass system 10 may be operative also as ordinary sunglasses.

Referring again to the Figures 1A - 1C, some additional features of liquid-crystal eyeglass system 10 are illustrated. Ocular misalignment may be recorded, as follows: sensors 36A and 36B may be incorporated with lenses 12A and 12B, respectively, to detect ocular misalignment, as taught by US Patent 6,511,175, to Hay, et al. Additionally, the glasses may be fitted with a prism responsive to the sensor to optically align the subject's deviating eye with his other eye. In this manner the two eyes are aligned to the object of regard and then gradually the alternating of vision between the eyes by use of variable occlusion may be utilized to induce proper alignment of the two eyes.

Additionally or alternatively, sensors 36A and 36B (Figure 1C) may be eye position trackers for detecting the position of the eyes relative to each other.

It will be appreciated that data from sensors 36A and 36B (Figure 1C) is also recorded in data storage unit 26. Additionally, this data may also be sent to distant clinic 40 (Figure 4) upon request.

One feature of the present invention is that amblyopia may be treated without impairing neurological development of normal stereoscopic vision, which may occur when treating certain types of amblyopia with a patch. This feature of retention of stereoscopic neurological development is due to either periodically alternating vision between the strong and weak eye, allowing both eyes to function together for brief periods of time or by selectively occluding one eye.

Accordingly, the deviant eye is identified, and a pair of eyeglasses comprising liquid crystal lenses 12A and 12B as described above is fitted to the user. The liquid crystal lens covering the strong eye is driven to a steady state or some variable of that steady state of opaqueness, serving the function as a patch in the prior art. As the weak eye begins to function properly over time, increasing levels of vision may be provided to the strong eye by slowly reducing opacity of the respective liquid-crystal lens, allowing pathways in the brain to form so that the user develops proper accommodation and binocular vision. Advantages of this system are that there are more options available to a therapist than just a patch that constantly occludes vision, with the capacity to tailor or customize treatment through the use of one or more of these options.

An additional method of treatment to enhance stereopsis is discussed below. Programmable liquid-crystal eyeglass system 10 as described above can be utilized in order to treat the effects of amblyopia which reduces binocularity and thereby stereopsis. Here, a "training mode" program may be developed using the glasses in conjunction with a computer with the appropriate programming and a stereoscopic monitor to alter the perception of stereopsis presented on the monitor display. This may be done by software in the computer that exaggerates angular separation of two images that when combined form a stereoscopic image, or two cameras at a spacing greater than the spacing of the eyes may record stereoscopic scenes that are loaded into the computer.

Either way, stereopsis presented by the monitor is enhanced by increasing angular separation of the pair of stereoscopic images or a combination of increased angular separation and increased positional separation of the pair of stereoscopic images. The combined effect of alternating the shutters of the glasses in sync with alternate frames of the monitor wherein each alternate video frame has one of the pairs of stereoscopic images is used to generate an enhanced or exaggerated 3 dimensional image. As stereopsis is learned by the user, it can be strengthened by gradually decreasing the angular separation (and physical separation) of the pair of images, which may be used in conjunction with altering the binocular input from the glasses. Such a system would be useful in treating children who have lost stereoscopic vision due to amblyopia or strabismus. In one variant of this embodiment, a device for measuring degree or extent of perception of stereopsis may be constructed by relating the amount of separation of the pair of stereoscopic images presented on the monitor with ability of the subject to detect the stereoscopic image. In another variant of this embodiment, the enhanced stereopsis developed by increased angular separation of a pair of cameras, and possibly exaggerated physical separation of the pair of images presented on a monitor display, may be used in applications where fine, delicate work is performed either by hand or by machine assisted hand operation. One example of where this would be particularly useful exists in microsurgery, such as where tiny blood or other fluid conduits are being reattached.

Preferably, occlusion-and-exercising sessions may include a combination of varying opacity levels by variable voltage, and by variable pulse frequency.

Furthermore, gray-level occlusion may be employed to enable partial vision from the sound eye for stereoscopic vision.

Additionally, using light sensor 25, the level of gray in gray-level occlusion is dependent on the ambient light.

Furthermore, the occlusion-and-exercising sessions are adjusted to the individual need of each child.

Preferably, both sides of lens 12A and 12B (Figures 1A - 1C) are covered with a polarizing film, which may further offer some protection if the lenses break.

Additionally in accordance with an embodiment of the present invention, because of the bifringent nature of liquid crystal, any one of lenses 12A and 12B (Figures 1A - 1C) may be disposed so that when opaque for a far field, it may still be transparent for a near field.

Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

**EXAMPLES**

Reference is now made to the following examples, which together with the above description illustrate the invention in a non limiting fashion.

**Example 1: Initiating stage:**

Operating parameters for an initial stage, for liquid-crystal eyeglass system 10, in accordance with the present invention, may be:

Operating voltage of between 3.0 and 9.0V;
Gray level opacity of between 0.1 and 5% transparency;

Operating temperatures of between -10 and 40 °C.
Session duration per day: 3 hours per day.
Gradual transition between occlusion and no occlusion: 10 seconds.

A random order is applied, during the session, for example:

$t_{OCC-4}$ - $t_{TR}$ - $t_{NO-2}$ - $t_{TR}$ - $t_{OCC-5}$ - $t_{TR}$ - $t_{NO-3}$ - $t_{TR}$ - $t_{OCC-2}$ - $t_{TR}$ - $t_{NO-1}$ - $t_{TR}$ - $t_{OCC-4}$ - $t_{TR}$ - $t_{NO-6}$ - $t_{TR}$ - $t_{OCC-5}$ - $t_{TR}$ - $t_{NO-1}$ - $t_{TR}$ - $t_{OCC-4}$ - $t_{TR}$ - $t_{NO-2}$ - $t_{TR}$ - $t_{OCC-3}$ - $t_{TR}$ - $t_{NO-1}$ ···

Table 1

| occlusion intervals | $t_{OCC-1}$ | $t_{OCC-2}$ | $t_{OCC-3}$ | $t_{OCC-4}$ | $t_{OCC-5}$ |
|---|---|---|---|---|---|
| time | 40 sec | 10 sec | 80 sec | 30 sec | 90 sec |

Table 2

| no occlusion intervals | $t_{NO-1}$ | $t_{NO-2}$ | $t_{NO-3}$ | $t_{NO-4}$ | $t_{NO-5}$ |
|---|---|---|---|---|---|
| time | 200 sec | 600 sec | 300 sec | 100 sec | 400 sec |

It will be appreciated that other values, which may be much shorter, for example, one second, 2-3 seconds, or 10 - 20 seconds, or longer, for example, 800 seconds, may similarly be used.

**Example 2: Core stage:**

Operating parameters for a core stage, for liquid-crystal eyeglass system 10, in accordance with the present invention, may be:

Operating voltage of between 3.0 and 9.0V;
Gray level opacity of between 0.1 and 5% transparency;
Operating temperatures of between -10 and 40 °C.
Session duration: 8 hours per day.
Gradual transition between occlusion and no occlusion: 20 seconds.

The session is constructed as a repeated sequence, as follows:

$t_{OCC-1}$ - $t_{TR}$ - $t_{NO-1}$ - $t_{TR}$ - $t_{OCC-2}$ - $t_{FR}$ - $t_{NO-2}$ - $t_{TR}$ - $t_{OCC-3}$ - $t_{TR}$ - $t_{NO-3}$ - $t_{TR}$ - $t_{OCC-4}$ -$t_{TR}$ - $t_{NO-4}$ - $t_{TR}$ - $t_{OCC-5}$ - $t_{TR}$ - $t_{NO-5}$ - $t_{TR}$ - $t_{OCC-6}$ - $t_{TR}$ - $t_{NO-6}$ - $t_{TR}$ - $t_{OCC-1}$ - $t{TR}$ - $t_{NO-1}$ ...

Table 1

| occlusion intervals | $t_{OCC-1}$ | $t_{OCC-2}$ | $t_{OCC-3}$ | $t_{OCC-4}$ | $t_{OCC-5}$ |
|---|---|---|---|---|---|
| time | 150 sec | 420 sec | 270 sec | 360 sec | 580 sec |

Table 2

| no occlusion intervals | $t_{NO-1}$ | $t_{NO-2}$ | $t_{NO-3}$ | $t_{NO-4}$ | $t_{NO-5}$ |
|---|---|---|---|---|---|
| time | 340 sec | 90 sec | 250 sec | 540 sec | 460 sec |

It will be appreciated that other values, which may be much shorter, for example, one second, 2-3 seconds, or 10 - 20 seconds, or longer, for example, 800 seconds, may similarly be used.

**Example 3: Maintenance stage:**

Operating parameters for a maintenance stage, for liquid-crystal eyeglass system 10, in accordance with the present invention, may be:

Operating voltage of between 3.0 and 9.0V;
Gray level opacity of between 0.1 and 5% transparency;
Operating temperatures of between -10 and 40 °C.
Session duration: 1 hour per day.
Gradual transition between occlusion and no occlusion: 20 seconds.

The session is constructed as a repeated sequence, as follows:

$t_{OCC-1} - t_{TR} - t_{NO-1} - t_{TR} - t_{OCC-2} - t_{TR} - t_{NO-2} - t_{TR} - t_{OCC-3} - t_{TR} - t_{NO-3} - t_{TR} - t_{OCC-4} - t_{TR} - t_{NO-4} - t_{TR} - t_{OCC-5} - t_{TR} - t_{NO-5} - t_{TR} - t_{OCC-6} - t_{TR} - t_{NO-6} - t_{TR} - t_{OCC-1} - t_{TR} - t_{NO-1} \cdots$

Table 1

| occlusion intervals | $t_{OCC-1}$ | $t_{OCC-2}$ | $t_{OCC-3}$ | $t_{OCC-4}$ | $t_{OCC-5}$ |
|---|---|---|---|---|---|
| time | 150 sec | 420 sec | 270 sec | 360 sec | 580 sec |

Table 2

| no occlusion intervals | $t_{NO-1}$ | $t_{NO-2}$ | $t_{NO-3}$ | $t_{NO-4}$ | $t_{NO-5}$ |
|---|---|---|---|---|---|
| time | 340 sec | 90 sec | 250 sec | 540 sec | 460 sec |

It will be appreciated that other values, which may be much shorter, for example, one second, 2-3 seconds, or 10 - 20 seconds, or longer, for example, 800 seconds, may similarly be used.

**Example 4:**

In accordance with the fourth example, pulsation takes place at frequency of about 50 and 80 Hz, wherein occlusion intervals last between about 2 and 5 msec during each pulse.

For example, for pulses of 50 Hz, the pulse length is 20 msec, and if occlusion takes place for 2 msec, the occluded lens remains transparent for the remaining 18 msec of each pulse.

It will be appreciated that other values, which may be shorter or longer may similarly be used.

Thus, the occluded lens appears only slightly darker than the transparent lens.

**Example 5:**

Control system 16 may be used to alternate vision between the left and right eyes either at preset timed intervals or at variable intervals, which may be performed in accordance with a specific sequence or at random. For example, after covering of the strong eye for a relatively long period, vision may be switched to the strong eye for a brief period of time, and then switched back to the weak eye. This may assist in development of binocular vision. In a variant of this embodiment, alternation of vision between the left and right eyes may occur at rates ranging from flicker fusion rates to above fusion rates. Again, this would assist in forming neural pathways to develop normal binocular vision. In these embodiments both eyes may be somewhat occluded, but the strong eye would be more occluded over time so as to force the weaker eye to work harder.

It will be appreciated that the present invention is applicable for amblyopia, weak eye, and strabismus.

The present invention may be used for exercising one or two eyes.

As used herein the term "about" refers to $\pm$ 10 %.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

**EP 1 680 703 B1**

**Claims**

1. A liquid-crystal eyeglass system (10), comprising:

an eyeglass frame (14);
at least one liquid-crystal lens (12A,12B), arranged in the frame (14) and adapted for variable opacity;
a reflective coating (21) on an exterior side of the at least one liquid-crystal lens (12A,12B), for providing the at least one liquid-crystal lens (12A,12B) with substantially invariant exterior appearance, under different levels of the variable opacity;
a control system (16) for controlling the level of the variable opacity of the at least one liquid-crystal lens (12A,12B);
at least one sensor (24), coupled to the control system (16), for sensing that the liquid-crystal eyeglass system is worn by a user;
a timing device (22), coupled to the at least one sensor (24) and to the control system (16), for indicating a timing parameter related to the wearing of the liquid-crystal eyeglasses system by the user, the timing parameter, being selected from the group consisting of: a date, a time, a duration of the occlusion-and-exercising session on that date, and a combination thereof; and
a data storage unit (26) coupled to the control system (16), adapted to store the timing parameter.

2. The liquid-crystal eyeglass system of claim 1, and further including a second liquid-crystal lens (12A,12B), arranged in the frame (14) and adapted for variable opacity, wherein each of the at least one and the second liquid-crystal lenses (12A,12B) is independently controlled by the control system (16).

3. The liquid-crystal eyeglass system of claim 1, further including a light sensor (25) coupled to the control system (16) for sensing an amount of ambient light, wherein the level of the variable opacity is increased responsive to the amount of sensed ambient light.

4. The liquid-crystal eyeglass system of claim 1, wherein said control system (16) is further adapted to communicate with a computerized implement (30), selected from the group consisting of a dedicated computerized implement, a palm top, a PDA, a laptop, and a personal computer.

5. The liquid-crystal eyeglass system of claim 4, wherein said computerized implement (30) is adapted to retrieve information from said control system (16).

6. The liquid-crystal eyeglass system of claim 4, wherein said computerized implement (30) is adapted to communicate to the user.

7. The liquid-crystal eyeglass system of claim 4, wherein said computerized implement (30) is adapted to provide feedback on compliance to the user.

8. The liquid-crystal eyeglass system of claim 4, wherein said computerized implement (30) is adapted to provide receive communication from the user.

9. The liquid-crystal eyeglass system of claim 4, wherein said at least one liquid crystal lens (12A,12B) may be opaque for a far field while transparent for a near field.

**Patentansprüche**

1. Flüssigkristall-Brillensystem (10), das umfasst:

einen Brillenrahmen (14);
zumindest eine Flüssigkristall-Linse (12A, 12B), die im Rahmen (14) angeordnet und für eine variable Trübung ausgelegt ist;
eine Reflexionsbeschichtung (21) auf einer Außenseite der zumindest einen Flüssigkristall-Linse (12A, 12B), um der zumindest einen Flüssigkristall-Linse (12A, 12B) ein im Wesentlichen unveränderliches äußeres Erscheinungsbild unter unterschiedlichen Höhen der variablen Trübung zu verleihen;
ein Steuersystem (16) zum Steuern der Höhe der variablen Trübung der zumindest einen Flüssigkristall-Linse (12A, 12B);

15

zumindest einen Sensor (24), der mit dem Steuersystem (16) verbunden ist, um zu erfassen, dass das Flüssigkristall-Brillensystem von einem Benutzer getragen wird;

eine Timing-Einheit (22), die mit dem zumindest einen Sensor (24) und dem Steuersystem (16) verbunden ist, um einen Timing-Parameter in Zusammenhang mit dem Tragen des Flüssigkristall-Brillensystems durch den Benutzer anzuzeigen, wobei der Timing-Parameter aus der Gruppe ausgewählt ist, bestehend aus einem Datum, einer Zeit, einer Dauer der Verschluss-und-Trainings-Sitzung an diesem Datum und einer Kombination davon; und

eine Datenspeichereinheit (26), die mit dem Steuersystem (16) verbunden und so ausgelegt ist, dass sie den Timing-Parameter speichert.

2. Flüssigkristall-Brillensystem nach Anspruch 1, das darüber hinaus eine zweite Flüssigkristall-Linse (12A, 12B) enthält, die im Rahmen (14) angeordnet und für eine variable Trübung ausgelegt ist, wobei jede der zumindest einen ersten und zweiten Flüssigkristall-Linsen (12A, 12B) vom Steuersystem (16) unabhängig gesteuert wird.

3. Flüssigkristall-Brillensystem nach Anspruch 1, das darüber hinaus einen Lichtsensor (25) enthält, der mit dem Steuersystem (16) verbunden ist, um eine Umgebungslichtmenge zu erfassen, wobei die Höhe der variablen Trübung in Reaktion auf die Menge des erfassten Umgebungslichts erhöht wird.

4. Flüssigkristall-Brillensystem nach Anspruch 1, wobei das Steuersystem (16) darüber hinaus so ausgelegt ist, dass es mit einem computergestützten Hilfsmittel (30) kommuniziert, das aus der Gruppe ausgewählt ist, bestehend aus einem dedizierten computergestützten Hilfsmittel, einem Palmtop, einem PDA, einem Laptop und einem Personal Computer.

5. Flüssigkristall-Brillensystem nach Anspruch 4, wobei das computergestützte Hilfsmittel (30) so ausgelegt ist, dass es Informationen vom Steuersystem (16) abruft.

6. Flüssigkristall-Brillensystem nach Anspruch 4, wobei das computergestützte Hilfsmittel (30) so ausgelegt ist, dass es mit dem Benutzer kommuniziert.

7. Flüssigkristall-Brillensystem nach Anspruch 4, wobei das computergestützte Hilfsmittel (30) so ausgelegt ist, dass es Feedback bezüglich der Compliance an den Benutzer bereitstellt.

8. Flüssigkristall-Brillensystem nach Anspruch 4, wobei das computergestützte Hilfsmittel (30) so ausgelegt ist, dass es Kommunikation vom Benutzer empfängt.

9. Flüssigkristall-Brillensystem nach Anspruch 4, wobei die zumindest eine Flüssigkristall-Linse (12A, 12B) für eine Weitsicht trüb und für eine Nahsicht transparent sein kann.

**Revendications**

1. Système de lunettes à cristaux liquides (10), comprenant :

une monture de lunettes (14) ;

au moins une lentille à cristaux liquides (12A, 12B), disposée dans la monture (14) et conçue pour avoir une opacité variable ;

un revêtement réfléchissant (21) sur une face extérieure de l'au moins une lentille à cristaux liquides (12A, 12B), pour donner à l'au moins une lentille à cristaux liquides (12A, 12B) une apparence extérieure sensiblement invariante, à des niveaux différents de l'opacité variable ;

un système de contrôle (16) pour contrôler le niveau de l'opacité variable de l'au moins une lentille à cristaux liquides (12A, 12B) ;

au moins un capteur (24), couplé au système de contrôle (16), pour détecter que le système de lunettes à cristaux liquides est porté par un utilisateur ;

un compteur de durée (22), couplé à l'au moins un capteur (24) et au système de contrôle (16), pour indiquer un paramètre de durée concernant le port du système de lunettes à cristaux liquides par l'utilisateur, le paramètre de durée étant sélectionné à partir du groupe constitué des éléments suivants : une date, un temps, une durée de la session d'exercice et d'occlusion sur cette date, et une combinaison de ces éléments ; et

une unité de stockage de données (26) couplée au système de contrôle (16), conçue pour stocker le paramètre de durée.

2. Système de lunettes à cristaux liquides selon la revendication 1, et comprenant en outre une seconde lentille à cristaux liquides (12A, 12B), disposée dans la monture (14) et conçue pour une opacité variable, où chacune des au moins une et seconde lentilles à cristaux liquides (12A, 12B) est indépendamment contrôlée par le système de contrôle (16).

3. Système de lunettes à cristaux liquides selon la revendication 1, comprenant en outre un capteur de lumière (25) couplé au système de contrôle (16) pour capter une quantité de lumière ambiante, où le niveau d'opacité variable est augmenté en réponse à la quantité de lumière ambiante détectée.

4. Système de lunettes à cristaux liquides selon la revendication 1, dans lequel ledit système de contrôle (16) est en outre conçu pour communiquer avec une implémentation informatisée (30), sélectionnée dans le groupe constitué d'une implémentation informatisée dédiée, un ordinateur de poche, un PDA, un ordinateur portable, et un ordinateur personnel.

5. Système de lunettes à cristaux liquides selon la revendication 4, dans lequel ladite implémentation informatisée (30) est conçue pour récupérer des informations depuis ledit système de contrôle (16).

6. Système de lunettes à cristaux liquides selon la revendication 4, dans lequel ladite implémentation informatisée (30) est conçue pour communiquer avec l'utilisateur.

7. Système de lunettes à cristaux liquides selon la revendication 4, dans lequel ladite implémentation informatisée (30) est conçue pour fournir une rétroaction sur la conformité à l'utilisateur.

8. Système de lunettes à cristaux liquides selon la revendication 4, dans lequel ladite implémentation informatisée (30) est conçue pour délivrer une communication reçue de l'utilisateur.

9. Système de lunettes à cristaux liquides selon la revendication 4, dans lequel ladite au moins une lentille à cristaux liquides (12A, 12B) peut être opaque pour un champ éloigné tandis qu'elle peut être transparente pour un champ rapproché.

Figure 1C

Figure 1A

Figure 1B

EP 1 680 703 B1

Figure 1D

Figure 1E

Figure 2B

Figure 2A

daily:

accumulative:

**Figure 2 C**

EP 1 680 703 B1

| daily: | 5 hours from 5 |
| --- | --- |
| accumulative: | 74 hours from 280 |

**Figure 2 D**

daily:

accumulative:

**Figure 2 E**

Figure 3B

Figure 3A

10

30

14

Dan, you
were great
today!

Figure 3C

10

30

14

You did not
play with me
today.

Figure 3D

10

30

14

The session is
about to bein

Figure 3E

10

30

14

Dan, don't
forget to
put me on!

Figure 3F

Figure 4

Figure 5A

Figure 5B

## REFERENCES CITED IN THE DESCRIPTION

**Patent documents cited in the description**

- US 6511175 B, Hay
- US 5452026 A, Marcy, III
- US 5264877 A, Hussey
- WO 9852091 A1
- US 4715702 A
- FR 2684770 A1
- US 4756605 A, Okada
- US 5552841 A, Gallorini
- US 5608567 A, Grupp

**Non-patent literature cited in the description**

- **SEARLE, A. ; NORMAN, P. ; HARRAD, R. ; VEDHARA, K.** Psychosocial and clinical determinants of compliance with occlusion therapy for amblyopic children. Nature Publishing Group (npg), March 2002, vol. 16, 150-155
- **SIMONSZ HJ ; POLLING JR ; VOORN R.** Electronic Monitoring of Treatment Compliance in Patching for Amblyopia. *Strabismus,* 1999, vol. 7 (2), 113-123